# EUROPEAN PATENT APPLICATION

(11) **EP 4 763 492 A1**
(43) Date of publication of application: **24.06.2026**
(21) Application number: 24307228.7
(22) Date of filing: 20.12.2024
(51) Int. Cl.: B29D 11/00

(54) **OPTICAL ARTICLE WITH A MICROSTRUCTURE ENCAPSULATED BY A COATING APPLIED BY WET DEPOSITION**

(71) Applicant: Essilor International, 94220 Charenton-Le-Pont (FR)
(72) Inventor: GAYON, Claire, 94300 Vincennes (FR); GACOIN, Eric, 75020 Paris (FR)
(74) Representative: Jacobacci & Partners France

(57) **Abstract**

The invention relates to a method of manufacturing an optical article, comprising providing a substrate having at least one main surface bearing a microstructure with a maximum peak-to-valley height PV1 higher than 0.1 µm, applying by wet deposition on said at least one main surface bearing a microstructure at least one curable liquid first coating composition, curing said at least one curable liquid first coating composition to form at least one first coating having an external surface, obtaining a substrate coated with one or more first coatings in which said microstructure is encapsulated, the outer first coating of which having an external surface with a maximum peak-to-valley height PV2 such that PV2/PV1 < 0.15, the ratio: maximum total thickness of the one or more first coatings / PV1 is higher than or equal to 2 and depositing an abrasion- and/or scratch-resistant coating onto said outer first coating.

## Description

The invention relates to a method for applying a coating on an optical article comprising a base substrate having a microstructured surface, in particular an optical lens.

Optical articles such as lenses generally comprise a substrate which is shaped in order to provide a desired optical power, and an anti-abrasion coating, also known as hard coating, covering at least one surface of the substrate to prevent the latter from being damaged by scratches.

For a number of applications, it has been found desirable to provide on the substrate a plurality of optical elements, such as microlenses, providing a local change of the power of the optical article. For instance, it is known from US 2017/131567 a lens comprising a plurality of microlenses formed on a surface of the lens, the local change of power provided by the microlenses enabling to suppress or slow down the progress of myopia.

It is also known from document WO 2016/168746 a lens having a first optical power, the lens comprising an array of microlenses having a second optical power, the microlenses allowing to increase the correction provided by the lens even though the curvature of the lens is limited, or allowing forming multifocal lenses with large areas of different optical powers while not exhibiting sharp steps that are visible at a micro-scale.

Directly depositing a hard coat on a microstructured surface would be an interesting means for protecting said structure. However, the covering of such microstructures with an abrasion- and/or scratch-resistant coating changes the power of the microstructure and therefore reduces or impairs the effect provided by the microstructure. Indeed, the height of a microstructure is usually of about 1 µm to 2 µm while the typical thickness of a hard coat is of about 3 µm. Thus, when a surface comprising protruding optical elements such as microlenses is covered by a protective hard coating (typically applied by dipping), the free surface of the hard coat coating is not exactly of the same curvature as that of the substrate it covers. Instead, the presence of the protruding elements causes said free surface to exhibit local deformations, and prevents from having a smooth free surface. Rather, said surface somewhat imperfectly reproduces the surface of the microstructure.

The thickness of the hard coat cannot be increased to solve this problem, since cracking problems of the hard coat are then observed, as well as loss of adhesion to the substrate. Another solution is to correct the optical error caused by the hard coating by changing the shape of the microstructure, but these geometry compensations are complex to implement.

Several alternative solutions to encapsulate a microstructure with a material such that the finished surface in contact with the air is smooth are known, but they rely on rather complex technologies (lamination, double injection, wafer bonding, overmolding, etc.). An example of such an overmolding method involving a moldable abrasion resistant coating composition is disclosed in US 2023/146460.

The purpose of the invention is to provide a solution to the defects of the prior art methods for encapsulating microstructures.

What is needed is an easy to implement process for encapsulating the microstructure by simply depositing a coating thereon, preferably by a liquid coating process, without using any molding process.

In particular, one aim of the invention is to provide a process for preparing an optical article comprising a substrate having a microstructured surface comprising at least one optical element such as a microlens, and an abrasion- and/or scratch-resistant coating protecting said substrate, wherein the abrasion- and/or scratch-resistant coating has a smooth surface that does not impair the optical effect of the microstructure.

The inventors have found that a specific intermediate coating having a smoothing function should be applied on the microstructured surface of the substrate before applying functional coatings such as an abrasion- and/or scratch-resistant coating or an impact-resistant primer coating. Obtaining a smooth surface coating covering the microstructure is achieved by a delicate balance of coating thicknesses, properties and processability.

Thus, the present invention relates to a method of manufacturing an optical article, comprising:
1) Providing a substrate having at least one main surface bearing a microstructure with a maximum peak-to-valley height of the microstructure PV1, measured in a direction perpendicular to said main surface, higher than 0.1 µm,
2) Applying by wet deposition on said at least one main surface bearing a microstructure at least one curable liquid first coating composition,
3) Curing said at least one curable liquid first coating composition to form at least one first coating having an external surface,
4) Obtaining a substrate coated with one or more first coatings in which said microstructure is encapsulated, the outer first coating of which having an external surface with a maximum peak-to-valley height PV2 measured in a direction perpendicular to said main surface such that PV2/PV1 < 0.15, the ratio: maximum total thickness of the one or more first coatings / PV1 is higher than or equal to 2,
5) Depositing an abrasion- and/or scratch-resistant coating onto said outer first coating, said abrasion- and/or scratch-resistant coating being different from the one or more first coatings.

According to embodiments of the invention, the first coating according to the invention fulfills nearly all the smoothing function required by the microstructured surface of the substrate. A complementary smoothing function can be provided by a subsequent coating such as an abrasion- and/or scratch-resistant coating. In other embodiments, the smoothing function is sufficiently achieved by the first coating, so that subsequent coatings do not play any role in smoothing the surface of the optical article.

### BRIEF DESCRIPTION OF THE DRAWINGS

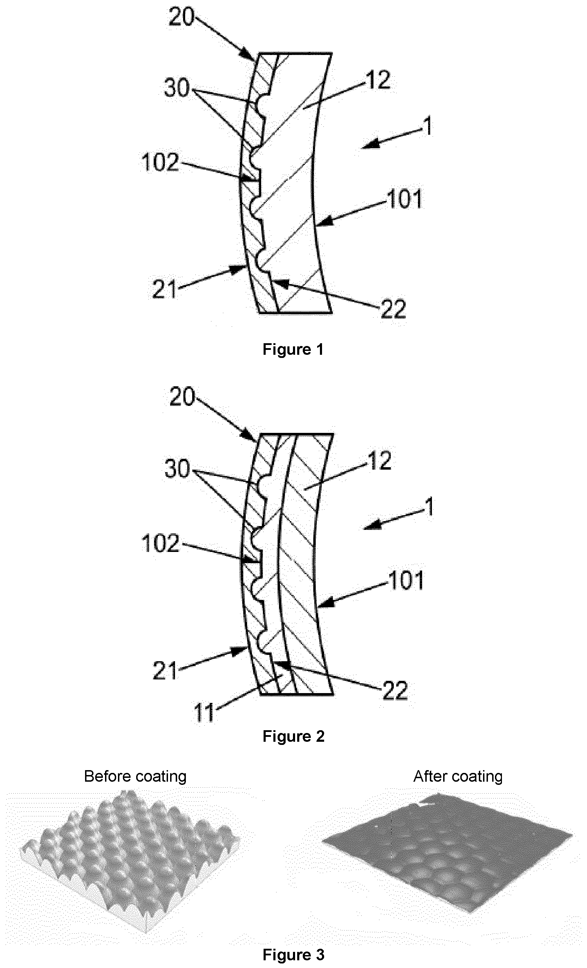

The foregoing and other objects, features and advantages of the present invention will become readily apparent to those skilled in the art from a reading of the detailed description hereafter when considered in conjunction with the accompanying drawings, wherein figures 1, 2 and 4 schematically represent examples of an optical article having a surface bearing a microstructure encapsulated by a first coating at step 4) of the process of the present invention, and figure 3 represents the surface of a microstructured substrate before and after coating with a first coating.

### DETAILED DESCRIPTION OF THE INVENTION

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

When an optical article comprises one or more surface coatings, the phrase "to deposit a coating or layer onto the optical article" means that a coating or layer is deposited onto the outermost coating of the optical article, i.e., the coating that is the closest to the air.

In the present application, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coatings may be arranged between the substrate/coating and the coating in question (however, it is preferably in contact with said substrate/coating), and (iii) does not necessarily completely cover the substrate/coating. When "a layer 1 is arranged under a layer 2", it is intended to mean that layer 2 is more distant from the substrate than layer 1.

The term "coating" is understood to mean any layer, layer stack or film, which may be in contact with the substrate and/or with another coating, for example a sol-gel coating or a coating made of a purely organic resin. A coating may be deposited or formed through various methods, including wet processing, gaseous processing, and film transfer.

The expression "microstructure encapsulated by a coating" means that the microstructure is fully embedded in such coating.

The optical article prepared according to the present invention is preferably a transparent optical article, preferably an optical lens or lens blank, and more preferably an ophthalmic lens or lens blank, such as a plastic eyeglass lens. Said ophthalmic lens may be a polarized lens, or a solar, tinted lens, with a corrective action or not. Preferably, the optical article is part of an eyewear.

The optical article may be coated on its convex main face (front side), concave main face (back/rear side), or both faces with the coatings according to the invention, preferably on the convex (front) main face. As used herein, the rear face of the substrate is intended to mean the face which, when using the article, is the nearest to the wearer's eye, in the cases of ophthalmic lenses. It is generally a concave face. On the contrary, the front face of the substrate is the face which, when using the article, is the most distant from the wearer's eye. It is generally a convex face. The optical article can also be a plano article.

The optical article comprises a substrate and coatings or layers. Coatings or layers are not constituents of the substrate.

For the sake of clarity, coatings or stacks disclosed herein will be described from bottom to top. In other words, the various layers of a stack will be described starting from a first or bottom layer of the stack that is applied to an optical substrate and proceeding sequentially with each subsequent layer of the stack applied. In this manner, a "top layer" of a stack is the last layer of the stack concerned applied during the coating process.

In an embodiment, the optical article according to the invention is coated on both faces (front and rear main faces) with the coatings according to the invention. The coatings may be identical or different.

Herein, the term "lens" means an organic or inorganic glass lens, comprising a lens substrate, which may be coated with one or more coatings of various natures.

The term "ophthalmic lens" is used to mean a lens adapted to a spectacle frame, for example to protect the eye and/or correct the sight. The lens can be shaped to provide optical power suitable for correcting a wearer ametropia, for instance myopia or hyperopia. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, filters particularly for photography or astronomy, optical sighting lenses, ocular visors, optics of lighting systems, screens, glazings, etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

A substrate is an object that is well-identifiable and well-known to those of ordinary skill in the art. A substrate is not a coating nor a layer. In particular, the substrate is not any one of the following coatings: an interferential coating, an antireflection coating, a reflective coating, a primer coating, a hard coat (abrasion- and/or scratch-resistant coating), an antifouling coating.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39^{®} from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC), diethylene glycol bis(allylcarbonate) polymers and substrates obtained from thermosetting polythiourethane resins, which are marketed by the Mitsui Toatsu Chemicals company as MR series, in particular MR-6^{®}, MR-7^{®} and MR-8^{®} resins. The latter substrates as well as the monomers used for their preparation are especially described in the patents US 4,689,387, US 4,775,733, US 5,059,673, US 5,087,758 and US 5191055.

The substrate typically has a center thickness higher than 1.2, 1.5, 2 or 3 mm. In one embodiment, the substrate has a thickness ranging from 100 µm to 500 µm.

In one embodiment, the substrate of the optical article and the microstructure are formed in a single step, preferably by injection molding or casting, leading to a microstructure integrally molded in the substrate (or wafer). In other embodiments, the microstructure can be created by a surfacing step of the surface of the substrate such as hot embossing or laser engraving, or alternatively by a deposition material step on the surface of the substrate, preferably by imprint, molding or inkjet. In the preferred embodiment, the microstructure is molded in the substrate. In one embodiment, the substrate has both main surfaces bearing identical or different microstructures.

Different techniques for obtaining microstructured substrates are disclosed in WO 99/29494, including transferring the microstructure into the substrate surface from a mold, the internal surface of which bears the microstructure and has a sight correcting geometric design, the microstructure being initially determined by an interferential process.

In one embodiment shown on figure 1, the microstructure having optical elements 30 is made in the substrate itself. The substrate 12 is the base element of the optical article 1. In this example, the microstructure is present on the front convex surface 102 of the substrate 12, which comprises two opposing main surfaces 101 (rear) and 102 (front). The first coating 20 has an internal surface 22 in contact with the surface 102 of the substrate bearing the microstructure, and an external surface 21.

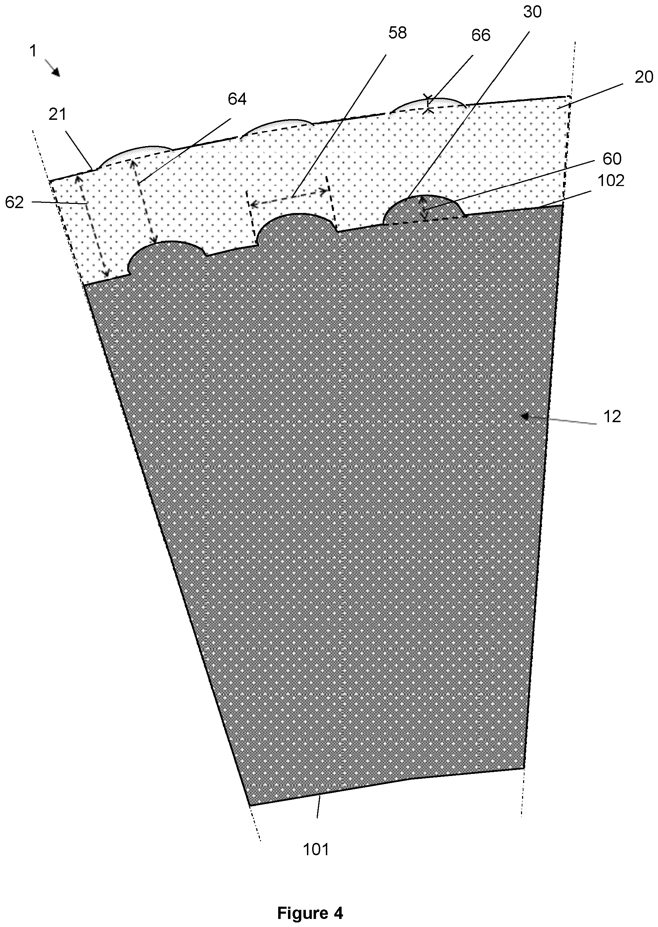

Figure 4 is an enlarged, partial sectional view of the optical article of figure 1. 58 represents the diameter of one element of the microstructure, 60 represents the maximum peak-to-valley height of the microstructure PV1, at the apex of the optical element (which for an optical element being a spherical microlens is at the center of the microlens), 62 represents the maximum total thickness of the one or more first coatings (only one first coating is represented on the figure; the represented thickness line is perpendicular to the mean surface of the substrate bearing the microstructure, the mean surface of the substrate being represented in dotted line under the optical elements 30), 64 represents the minimum total thickness of the one or more first coatings. 66 represents the maximum peak-to-valley height PV2 of the outer first coating (for a good visualization, PV2 is not represented at the scale with regard to PV1, and has been enlarged).

In one embodiment, the substrate bears a microstructured wafer. The microstructured wafer has an internal (main) surface in contact with a main surface of the substrate, and an external (main) surface bearing the microstructure.

The external surface of the wafer comprising the microstructure may be a concave or convex surface, depending on whether the wafer is applied on a concave surface or a convex surface of the substrate.

The wafer or carrier is a thin supporting element, generally made of a thermoplastic material. The wafer may comprise a variety of different constructions and materials. Such constructions include a film structure formed by either a single film layer (non-laminated) or a film laminate structure formed of multiple film layers attached to one another, freestanding films, films with removable or permanent protective sheets.

The wafer is preferably a plano wafer providing no optical power and hence provides no correction to the wearer. The wafer can complement the substrate by providing one or more optical properties to the finished optical article, such as filtering specific wavelengths, providing polar or photochromic properties.

The wafer can be a preformed film, or a stack of several coatings supported by a film. Such coatings and preparation of coated wafers are described, e.g., in WO 2008/015223 and US 6562466.

Suitable materials for forming the wafer are polysulfones, aliphatic poly(meth)acrylates, such as poly(methyl methacrylate), polyethylene, polypropylene, polystyrene, SBM (styrenebutadiene-methyl methacrylate) block copolymers, polyphenylene sulfide, arylene polyoxides, polyimides, polyesters, polycarbonates such as bisphenol A polycarbonate, PVC, poly(vinyl alcohol), cyclic oleofin copolymers (COC), polyamides such as nylons, cellulose acetate butyrate, cellulose acetates such as cellulose triacetate, other copolymers thereof, and mixtures thereof. The microstructured wafer is preferably made of polycarbonate. Preferably, the wafer is made of a non-elastomer material.

Generally, the wafer has a thickness of 20 µm to 1 mm, preferably from 30 to 600 µm.

In an embodiment shown on figure 2, the microstructure having optical elements 30 is made in a wafer 11 deposited on the substrate 12, which is the base element of the optical article 1. The substrate 12 comprises two opposing main surfaces, a rear surface 101, and a front surface coated with a microstructured wafer 11. In this example, the microstructure is present on the (outer) front convex (main) surface 102 of the wafer 11. The first coating 20 has an internal surface 22 in contact with the outer surface 102 of the wafer bearing the microstructure, and an external surface 21.

In the present application, expressions such as "substrate bearing a microstructure" or "microstructured surface of the substrate" also apply to the case where the substrate bears, e.g., a microstructured wafer.

Prior to depositing the first coating or other functional coatings, the surface of the article is usually submitted to a physical or chemical surface activating and cleaning pre-treatment, so as to improve the adhesion of the layer to be deposited, such as disclosed in WO 2013/013929. This pre-treatment is generally performed on the surface of an abrasion- and/or scratch-resistant coating (hard coat).

This pre-treatment is generally carried out under vacuum. It may be a bombardment with energetic species, for example an ion beam method ("Ion Pre-Cleaning" or "IPC") or an electron beam method, a corona treatment, an ion spallation treatment, an ultraviolet treatment or a plasma treatment under vacuum, using typically an oxygen or an argon plasma.

By energetic species, it is meant species with an energy ranging from 1 to 300 eV, preferably from 1 to 150 eV, and more preferably from 10 to 150 eV and most preferably from 40 to 150 eV. Energetic species may be chemical species such as ions, radicals, or species such as photons or electrons.

The pretreatment may also be an acid or a base surface treatment and/or a solvent surface treatment (using water or an organic solvent) with or without ultrasonic treatment. Many treatments may be combined. Thanks to these cleaning treatments, the cleanliness of the substrate surface is optimized

A thin layer for improving adhesion between the microstructured surface and the first coating, preferably having a few nanometers thickness, typically less than or equal to 5 nm thickness, which will not significantly have or will not have a function of reducing PV1, can be applied on the microstructured surface.

The microstructured surface of the substrate to be coated with the first coating will now be described.

A main surface of the substrate has a relief organized according to a pattern, in other words, a microstructured surface, which confers to the final optical article an optical surface having the properties imparted by the microstructure (for example prevention of the progression of myopia or hyperopia).

In step 1) of the present process, the microstructure is initially situated at an interface with air.

The microstructure comprises one or a plurality of optical elements. In one embodiment, the surface of the substrate defines a plurality of concave recesses and/or a plurality of convex protrusions. In preferred embodiments, at least one optical element of the microstructure, preferably each of them, protrudes from the main surface of the substrate, preferably the front main surface. By "protruding" is meant that the optical element projects from the surface of the substrate, outwardly, i.e. away from said substrate.

In one embodiment, the optical element, preferably each optical element, is formed of the same material as the substrate and may be formed integral with the latter. In one embodiment, in case a microstructured wafer is used, the optical element, preferably each optical element, is formed of the same material as the wafer. If the wafer is a laminate, each optical element 30 may be formed of the same material as the layer from which it protrudes.

Generally, an optical element of the microstructure is a discrete element of microscopic scale, inducing a local change in optical power of the optical article.

The optical elements of the microstructure can be contiguous or non-contiguous. They can cover specific zones of the substrate, like the center, the periphery of the substrate or any other area. They can be present on the main surface of the substrate on a defined array like circle, square or hexagon, or random distributed. For example, the optical elements may be regularly distributed along circles centered on the optical center of the refraction area.

The microstructure present on the surface of the substrate has a maximum peak-to-valley height PV1, measured in a direction perpendicular to said main surface, higher than 0.1 µm. In the present application, the direction perpendicular to the main surface of the substrate (which can be a wafer surface) is defined locally with respect to a mean surface of the substrate carrying the optical elements of the microstructure. The mean surface may be a sphere or a low degree polynomial fitting surface. In other words, the maximum peak-to-valley height of the microstructure PV1 can be then determined using local perpendicular axis to this main surface, and calculating for each point of the microstructure the difference between the maximum positive deviation minus the minimum negative deviation to the main surface, along the axis.

The maximum peak-to-valley height of an optical element of the microstructure is the vertical distance between the maximum height and the maximum depth in the evaluation area. When the microstructure comprises optical elements having different heights, PV1 relates to the highest height among the different optical elements composing the microstructure.

In one embodiment, the maximum peak-to-valley height of the microstructure PV1, measured in a direction perpendicular to the main surface of the substrate, is lower than or equal to 100 µm, 50 µm, 30 µm, 20 µm or 15 µm, more preferably lower than or equal to 10 µm or 5 µm, and even more preferably ranges from 2 to 5 µm. In one embodiment, PV1 is lower than or equal to 1 µm, 0.1 µm or 0.05 µm.

In one embodiment, the diameter of each of the optical elements of the microstructure is lower than or equal to 2 mm, and preferably ranges from 500 nm to 1.5 mm.

Referring to figures 1 and 2, one can notice that the surface 102 of the substrate/wafer carrying the microstructure is formed by two kinds of outer surfaces: a first one is the outer surface of each optical element, comprising local curvature variations due to the shape of the optical elements, whereas the second one is the surface of the substrate/wafer disposed between the optical elements, which exhibits fewer or even no local curvature variations. At this stage, the optical article (which can comprise a substrate or a substrate coated with a wafer) therefore exhibits a thickness in average greater at the optical elements 30 than away from them, and the maximum thickness of the optical article is reached at the point of maximum height of the optical elements.

In one embodiment of the invention, the microstructure comprises at least one or a plurality of optical elements selected from a Fresnel lens, a microlens, a diffractive lens.

The microstructure preferably includes a lenslet or a plurality of lenslets as optical elements. Lenslets may form bumps and/or recesses at the main surface they are arranged onto. The outline of the lenslets may be round or polygonal, for example hexagonal.

More particularly, lenslets may be microlenses, so that the microstructure comprises a plurality of microlenses. A microlens may be spherical, toric, or have an aspherical shape, rotationally symmetrical or not. A microlens may have a single focus point, or cylindrical power, or non-focusing point.

In one embodiment, the lenslet has an optical function of focusing an image on a position other than the retina. In preferred embodiments, lenslets or microlenses can be used to prevent progression of myopia or hyperopia. In that case, the resulting optical article provides an optical power for correcting myopia or hyperopia, and the microlenses or the lenslets may provide respectively an optical power greater than the optical power of the substrate if the wearer has myopia, or an optical power lower than the optical power of the substrate if the wearer has hyperopia.

In one embodiment, the main surface of the substrate has at least one geometrically defined surface forming a Fresnel lens.

The optical elements of the microstructure may be Fresnel structures, diffractive structures defining each a Fresnel structure, refractive structures, diffusive structures, permanent technical bumps, pillars or any phase-shifting element. The optical element can also be a refractive optical element such as microprisms and a light-diffusing optical element such as small protuberances or cavities, or any type of element generating roughness on the substrate. The optical element can also be π-Fresnel lenslets as described in US 20211/09379, i.e., Fresnel lenslets which phase function has π phase jumps at the nominal wavelength, as opposed to unifocal Fresnel lenses which phase jumps are multiple values of 2π. Such lenslets include structures that have a discontinuous shape. In other words, the shape of such structures may be described by an altitude function, in terms of distance from the base level of the main surface of the optical article the lenslet belongs to, which exhibits a discontinuity, or which derivative exhibits a discontinuity. The microstructure can comprise cylindrical annular refractive elements.

Lenslets may have a contour shape being inscribable in a circle having a diameter greater than or equal to 0.5 µm and smaller than or equal to 1.5 mm. Shape and arrangements of microlenses are described in more details in US 2023/161078.

Lenslets may have a maximum height PV1, measured in a direction perpendicular to the main surface they are arranged onto, that is greater than or equal to 0.1 µm and less than or equal to 50 µm.

The substrate bearing the microstructure can be defined as a surface, that can be a plano, spherical, sphero-cylindrical or even complex surface, that includes the central point of every microstructure.

Lenslets may have periodical or pseudo periodical layout, but may also have randomized positions. Exemplary layouts for lenslets may be a grid, for example a grid with constant grid step, honeycomb layout, multiple concentric rings, contiguous, e.g., no space in between microstructures. A distance between microstructures may range from 0 (contiguous) to 3 times the diameter of the structure (separate microstructures).

These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 diopters, and light deviation is configured such that the structure may locally scatter light with angle ranging from +/- 1 ° to +/- 30°.

Generally, the microstructure, especially for myopia control, comprises optical elements having at least a maximum height PV1 of 0.1 µm or more, PV1 can range from 0.1 µm to 200 µm, preferably from 1 to 100 µm, more preferably from 5 to 50 µm, even better from 10 to 50 µm.

The at least one first coating according to the invention has the function of fully or almost fully encapsulating the optical elements of the microstructure, and contributes to physically protect them. As can be seen on figures 1-2 where one first coating is employed, said coating 20 covers the surface of the substrate (or wafer) from which each optical element 30 (typically a microlens) protrudes.

One or more first coatings are applied on the at least one main surface bearing a microstructure, resulting in a substrate coated with one or more first coatings in which said microstructure is encapsulated, the outer first coating of which having an external surface with a maximum peak-to-valley height PV2 measured in a direction perpendicular to said main surface such that PV2/PV1 < 0.15, the ratio: maximum total thickness of the one or more first coatings / PV1 is higher than or equal to 2.

In one embodiment, the maximum total thickness of the one or more first coatings is lower than or equal to 200 µm, preferably lower than or equal to 150 µm, 100 µm, 90 µm, 80 µm, 70 µm, 60 µm, 50 µm, 40 µm, 30 µm, 20 µm.

In case a plurality of first coatings is used, for example in order to reach a sufficiently low value of PV2, the internal surface 22 of the first coating in contact with the surface 102 of the substrate/wafer relates to the inner first coating of which.

The maximum total thickness of the one or more first coatings (measured in a direction perpendicular to the main surface of the substrate, after curing) is preferably higher than or equal to 2.5 µm or 5 µm, and preferably ranges from 10 µm to 200 µm, more preferably from 10 µm to 100 µm, even better from 10 µm to 30 µm. The expression "maximum total thickness of the first coating(s)" is used, since the thickness of the encapsulating first coating(s) is generally not uniform across the surface of the substrate due to the underlying microstructure having height differences. Said maximum total thickness of the first coatings corresponds to the highest thickness at any point of the surface, considering the fact that the first coating is also present between the optical elements.

The maximum total thickness of the one or more first coatings (measured in a direction perpendicular to the main surface of the substrate) should be sufficient, i.e., at least 2 times, preferably at least 5 times the maximum peak-to-valley height of the microstructure PV1, i.e., the maximum height of each of its optical elements, and may range from 2.5 to 12 times PV1 or from 2.5 to 8 times PV1.

The thickness of the coatings can be controlled, for example, by adjusting the viscosity of the liquid first coating composition, application speed and spin off speed (when applied by spin coating).

The first coating has an external surface with a maximum peak-to-valley height PV2 measured in a direction perpendicular to said main surface such that PV2/PV1 < 0.15, preferably PV2/PV1 < 0.1, 0.09 or 0.08. This parameter quantifies the smoothing effect of the first coating. The lowest the PV2/PV1, the better the smoothening effect of the first coating(s). When a plurality of first coatings is used, PV2 is defined for the outer first coating of which.

In one embodiment, PV2 is lower than or equal to 600 nm, 500 nm, 400 nm, or 300 nm, the level of acceptability of PV2 depending in part on the starting value of the maximum peak-to-valley height of the microstructure PV1. Thus, the outer first coating, once cured, has an outer surface that is much smoother than the initial microstructured surface of the substrate, but a certain level of residual PV2, i.e., surface roughness, is tolerated at this stage of the present process. In one embodiment, PV2 is higher than or equal to 50 nm, 75 nm, 100 nm, or 150 nm.

Generally, perfect smoothing of the microstructure height by the first coatings cannot be achieved. In this regard, PV2/PV1 is typically > 0.01, in some embodiments. Levels of PV2/PV1 ≤ 0.01 can generally only be achieved by complex processes involving molding a material to the shape of the microstructure.

The smooth or almost smooth outer surface of the (outer) first coating does not cause an excessive alteration of the power of the optical elements of the microstructured substrate. In other words, the first coating covering the substrate comprising optical elements has little or no impact on the path of incoming rays of light. Therefore, the first coating allows to keep the optical properties of the microstructure without the need to apply any complex compensation or only a simple compensation such as uniform compensation or homothetic compensation.

In one embodiment, said outer surface of the (outer) first coating is parallel to the surface of the lens substrate without the optical elements of the microstructure, i.e., a surface which does not replicate the height changes of the microstructure. It has the same base curve as the base curve of the surface of the substrate without the optical elements of the microstructure, thanks to the manufacturing method of the first coating.

In another embodiment, deposition of the abrasion- and/or scratch-resistant coating onto the (outer) first coating is necessary to achieve a complete smoothing of the surface of the optical article.

Peak-to-valley heights PV1 and PV2 can be accurately determined by measuring instruments such as a profilometer of Taylor Hobson type after each step of curing when implementing the process of the invention, or on the final optical article using the cross-cut method described hereafter. The maximum peak-to-valley height of the microstructure PV1 has to be determined by considering each element of the microstructure individually.

Another method for measuring PV1 and PV2 consists in using an optical interferometer (for example Zygo from Ametek) to measure xyz topography of the surface of the coatings and of the surface of the microstructured substrate below the coatings.

The surface of the outer first coating on which PV2 is measured generally replicates in an attenuated manner the geometry of the surface bearing the microstructure, with the elements of the microstructure having lower relief/curvature than the elements on which PV1 is measured. PV2 is measured with the same method as described for PV1 material forming the first coating nc are preferably selected to be different, in order to allow the change of local power or other optical function incurred by the microlenses to occur. Preferably, nc < ns.

In one embodiment, the microstructure is made of a material having a refractive index ns and the first coating that is in direct contact with said microstructure (inner first coating in case of a plurality of first coatings) has a refractive index nc such that Ins-ncl > 0.05. Preferably, Ins-ncl > 0.09, 0.1, 0.15, 0.2 or 0.3.

Indeed, for an optical element of a microstructure such as microlens of a given diameter and a given desired optical power, the more important the difference in refractive index between the material forming the first coating and the material forming the optical element, the lower the maximum peak-to-valley height of the optical elements of the microstructure PV1 which is required to achieve said optical power, and in turn the easier is the microstructured substrate to manufacture. Therefore, this refractive index gap allows to obtain the desired optical power for the optical elements while having a peak-to-valley height of said optical elements which is relevant for the various technologies used by the skilled person to produce optical elements on a substrate surface, while not needing aesthetically unpleasant too high optical elements.

In an embodiment, the coatings applied later on (the abrasion- and/or scratch-resistant coating or primer coating and the abrasion- and/or scratch-resistant coating) are made of materials having a refractive index close to the refractive index of the outer first coating to minimize the optical effect of the remaining PV2, if any. This refractive index difference is preferably lower than or equal to 0.05; 0.04; 0.03; 0.02; 0.01, 0.005; 0.004; 0.003; 0.002; 0.001; 0.0005; 0.0004; 0.0003, 0.0002; 0.0001 and even better lower than 0.0001. In another embodiment, this refractive index difference is significant (typically higher than 0.05, 0.06, 0.07, 0.08, 0.09, 0.1, however preferably lower than 0.15).

Generally, the number of optical elements is quite high. To avoid conducting PV1 and PV2 measurements on all elements, PV1 and PV2 can be measured on the final optical article, typically an ophthalmic lens, by randomly selecting at least 2 areas, more preferably 3 areas at different spaced apart locations on the lens (for example close to the center of the lens and close to the periphery) of typically 10 mm x10 mm size so that such areas include at least 10 optical elements in total.

Especially, when the optical elements are microlenses, for example spherical microlenses having a diameter of 0.5 to 2 mm, microlenses to be measured are selected at the naked eye or under magnification and their center whose height will correspond to maximum height PV1 are identified by marking, for example by using a pen. Lens pieces bearing the areas that include the selected microlenses are then mechanically cross-cut by a bow saw according to a plano surface perpendicular to the surface of the lens. Their cross section is then grinded and polished using a polisher such as Mecatech 334 from PRESI up to reaching the plane encompassing the center(top) of the microlens and the different interfaces between microlenses and first coating can be visualized, using an optical microscope with measurements functions and PV1 and PV2 can be measured.

The above method can be used for other optical elements than microlenses having a size of 0.02 mm or more.

The liquid curable composition suitable for forming the at least one first coating will now be described.

The liquid curable composition suitable for forming a transparent first coating may comprise one or more of organosilane compounds such as epoxysilanes or hydrolyzates thereof, siloxane compounds, polyfunctional epoxy compounds which are not silicon compounds having at least one hydrolyzable group directly linked to the silicon atom, and preferably not silicon compounds, (thio)acrylic monomers, methacrylic monomers, (thio)urethane monomers, catalysts such as free radical photo-initiators or cationic photo-initiators, surfactants, solvents. In some embodiments, it is a sol-gel composition, a photo-curable composition, or a thermally curable composition that is not a sol-gel composition.

Accordingly, the first coating can comprise a matrix made of (thio)urethane compounds, (meth)acrylate compounds, epoxy compounds, organosilane compounds, siloxane compounds and mixtures thereof, without limitation to these compounds.

In some embodiments, the composition comprises at least one epoxysilane or hydrolyzate thereof having at least one hydrolyzable group directly linked to the silicon atom and at least one epoxy group. The epoxysilane preferably has from 2 to 6, more preferably 2 or 3 hydrolyzable functional groups directly linked to the silicon atom that lead to an OH group upon hydrolysis. Examples of hydrolyzable functional groups include but are not limited to alkoxy groups -O-R¹, wherein R¹ preferably represents a linear or branched alkyl or alkoxyalkyl group, preferably a C₁-C₄ alkyl group, acyloxy groups -O-C(O)R², wherein R² preferably represents an alkyl group, preferably a C₁-C₆ alkyl group, and more preferably a methyl or ethyl group, halogen groups such as Cl and Br, amino groups optionally substituted with one or two functional groups such as an alkyl or silane group, for example, the NHSiMe₃ group, alkylenoxy groups such as the isopropenoxy group, and the hydroxyl group -OH.

Preferred epoxysilanes are epoxyalkoxysilanes, and more preferred are those having one epoxy group and three alkoxy groups. The epoxy groups of the epoxysilane are preferably chosen from glycidyl groups and cycloaliphatic epoxy groups, more preferably from alkyl glycidyl ether groups and cycloaliphatic epoxy groups.

Examples of such epoxysilanes include λ-glycidoxypropyl triethoxysilane, λ-glycidoxypropyl trimethoxysilane (GLYMO), 2-(3,4-epoxycyclohexyl) ethyltrimethoxysilane, 3-glycidoxypropyl methyldiethoxysilane, 2-(3,4-epoxycyclohexyl) ethyltriethoxysilane. Among those organosilanes, γ-glycidoxypropyltrimethoxysilane (GLYMO) is preferred.

In some embodiments, the epoxysilane is hydrolyzed before being mixed with the other components of the composition. The hydrolysis may be performed as known in the art, by using acidic catalysts (e.g., hydrochloric acid or acetic acid), in the presence of water.

Other families of alkoxysilanes useful for the present invention include dialkyl-dialkoxysilanes, alkyl-trialkoxysilanes, alkenyl-trialkoxysilanes and mixtures thereof. In a particular embodiment, the vinylalkoxysilane is vinyltrimethoxysilane. Organosilanes without epoxy function can be used as partial substitutes for epoxyalkoxysilanes.

In some embodiments, the composition comprises at least one polyfunctional epoxy compound which is not a silicon compound having at least one hydrolyzable group directly linked to the silicon atom, selected from the group consisting of diglycerol tetraglycidyl ether, dipentaerythritol tetraglycidyl ether, sorbitol polyglycidyl ether, polyglycerol polyglycidyl ether, pentaerythritol polyglycidyl ether such as pentaerythritol tetraglycidyl ether, trimethylolethane triglycidyl ether, trimethylolmethane triglycidyl ether, trimethylolpropane triglycidyl ether, triphenylolmethane triglycidyl ether, trisphenol triglycidyl ether, tetraphenylol ethane triglycidyl ether, tetraglycidyl ether of tetraphenylol ethane, p-aminophenol triglycidyl ether, 1,2,6-hexanetriol triglycidyl ether, glycerol triglycidyl ether, diglycerol triglycidyl ether, glycerol ethoxylate triglycidyl ether, castor oil triglycidyl ether, propoxylated glycerine triglycidyl ether, ethylene glycol diglycidyl ether, 1,4-butanediol diglycidyl ether, neopentyl glycol diglycidyl ether, cyclohexanedimethanol diglycidyl ether, dipropylene glycol diglycidyl ether, polypropylene glycol diglycidyl ether, dibromoneopentyl glycol diglycidyl ether, hydrogenated bisphenol A diglycidyl ether, (3,4-epoxycyclohexane) methyl 3,4-epoxycylohexylcarboxylate and mixtures thereof. Addition of such polyfunctional epoxy compounds improves toughness of the resulting cured coating and adhesion to thermoset resin substrates.

In some embodiments, the composition comprises acrylic or methacrylic monomers or a mixture of acrylic and/or methacrylic monomers. As used herein, the terms "acrylic" and "acrylate" are used interchangeably and include derivatives of acrylic acids, as well as substituted acrylic acids such as methacrylic acid, ethacrylic acid, thio(meth)acrylate compounds etc., unless indicated otherwise.

The mixture of (meth)acrylic monomers can include mono- or poly-acrylate monomers, such as di-, tri-, tetra-, penta-, and hexa-acrylic monomers. Typically, the higher the functionality, the greater is the crosslink density. Additional co-polymerizable monomers, such as epoxy or isocyanate containing monomers, can also be present in the formulation. Polymerizable compounds combining polymerizable groups of different nature such as alkoxysilyl acrylates can also be employed.

Examples of acrylic compounds that may be used as main components of the acrylate-based coating compositions are:
- monofunctional (meth)acrylates: Allyl methacrylate, 2-ethoxyethyl acrylate, 2-ethoxyethyl methacrylate, caprolactone acrylate, isobornyl methacrylate, lauryl methacrylate, polypropylene glycol monomethacrylate, hydroxyethyl methacrylate.
- difunctional (meth)acrylates: 1,4-butanediol diacrylate, 1,4-butanediol dimethacrylate, 1,6-hexanediol diacrylate, 1,6-hexanediol dimethacrylate, ethoxylated bisphenol A diacrylate, polyethylene glycol di(meth)acrylates such as polyethylene glycol diacrylate, tetraethylene glycol diacrylate, polyethylene glycol dimethacrylate, polyethylene glycol diacrylate, tetraethylene glycol diacrylate, tripropylene glycol diacrylate, dipropyleneglycol diacrylate, neopentyl glycol diacrylate, tetraethylene glycol dimethacrylate, diethylene glycol diacrylate, dioxane glycol diacrylate compounds such as 2-[5-[(acryloyloxy)methyl]-5-ethyl-1,3-dioxan-2-yl]-2-methylpropyl acrylate.
- trifunctional (meth)acrylates: Trimethylolpropane trimethacrylate, Trimethylolpropane triacrylate, pentaerythritol triacrylate, ethoxylated trimethylolpropane triacrylate, trimethylolpropane trimethacrylate.
- tetra to hexa (meth)acrylates: Dipentaerythritol pentaacrylate, dipentaerythritol tetraacrylate, dipentaerythritol hexaacrylate, pentaerythritol tetraacrylate, ethoxylated pentaerythritol tetraacrylate, pentaacrylate esters.

As is well known in the art, the amount, number and type of functional acrylates included in the coating composition will vary depending on the physical properties of the coating that are most desired, since, for example, varying the cross-link density of the film, e.g., by varying the amount of multi-functional acrylates or other cross-linking monomers will modify properties such as hardness, tensile strength, chemical resistance, and adhesion. The addition of polyfunctional (meth)acrylate monomers may improve adhesion, tinting, scratch resistance and adhesion to thermoplastic substrates.

Commercially available acrylate materials are available from various manufacturers and include those sold under the tradenames, SARTOMER^{®}, EBECRYL^{®} and PHOTOMER^{®}.

The first coating composition can comprise a system for initiating the polymerization of monomers, especially when (meth)acrylate monomers and/or polyfunctional epoxy monomers are used. The polymerization initiating system can comprise one or more thermal or photochemical polymerization initiating agents or alternatively, a mixture of thermal and photochemical polymerization initiating agents. Generally, the initiating agents are used in a proportion of 0.01 to 5 % by weight with respect to the total weight of polymerizable compounds present in the composition.

When (meth)acrylate monomers are used, the coating composition may comprise at least one free radical photo-initiator. Such free radical photo-initiators can be selected for example from haloalkylated aromatic ketones such as chloromethylbenzophenones, benzoin and benzoin alkyl ethers such as benzoin methyl ether, benzoin ethyl ether, benzoin isopropyl ether, benzoin isobutyl ether, dialkoxyacetophenones such as diethoxyacetophenone and 2,2-dimethoxy-2-phenylacetophenone, benzylideneacetophenone, hydroxy ketones such as (1-[4-(2-hydroxyethoxy)-phenyl]-2-hydroxy-2-methyl-1-propan-1-one) (Irgacure^{®} 2959 from CIBA), 2,2-di-sec-butoxyacethophenone, 2,2-diethoxy-2-phenyl-acetophenone, 1-hydroxy-cyclohexyl-phenyl-ketone (Irgacure^{®} 184 from CIBA) and 2-hydroxy-2-methyl-1-phenylpropan-1-one (such as Darocur^{®} 1173 sold by CIBA), alpha amino ketones, particularly those containing a benzoyl moiety, otherwise called alpha-amino acetophenones, for example 2-methyl 1-[4-phenyl]-2-morpholinopropan-1-one (Irgacure^{®} 907 from CIBA), (2-benzyl-2-dimethyl amino-1-(4-morpholinophenyl)-butan-1-one (Irgacure^{®} 369 from CIBA), monoacyl and bisacyl phosphine oxides and sulphides, such as phenylbis(2,4,6-trimethylbenzoyl)-phosphine oxide (Irgacure^{®} 819 sold by CIBA), triacyl phosphine oxides, 2,2'-bis(2-chlorophenyl)-4,4',5,5'-tetraphenyl-1,2'-biimidazole.

Similarly, polyfunctional epoxy monomers may be used in combination with at least one cationic photoinitiator, which may be selected from triarylsulfonium salts, diaryliodonium salts or mixtures thereof, preferably triarylsulfonium salts. The triarylsulfonium or diaryliodonium salts used in the present invention advantageously have counter-ions of low nucleophilicity and are preferably selected from triarylsulfonium hexafluoroantimonate, triarylsulfonium hexafluorophosphate, diaryliodonium hexafluoroantimonate and diaryliodonium hexafluorophosphate salts.

The first coating can also be, without limitation, a polyurethane, melamine, epoxy, alkyd, polyester, polyether, or polyamide coating.

In one embodiment, the curable liquid first coating composition applied in step 2) undergoes a thickness shrinkage upon curing of less than 20 %. A low shrinkage rate of the first coating is beneficial to limit residual surface roughness (PV2) after curing/polymerization of the first coating.

Shrinkage is an intrinsic property of a material that occurs during polymerization. A method based on theoretical data (functionality, density and molecular weight of the monomer) can be used to calculate the theoretical material shrinkage and is disclosed in M. M. Coleman, J. F. Graf, P. C. Painter, Specific Interactions and the Miscibility of Polymer Blends, Technomic Publishing Company, USA (1991)). The value of maximum shrinkage assumes a 100% conversion of polymerizable functions of the monomer: Maximum shrinkage = (-1.38+2668 x functionality of the monomer x density of the monomer) / molecular weight of the monomer.

The first coating should be soft enough for not cracking, and hard enough for not causing cracks in the abrasion- and/or scratch-resistant coating to be subsequently deposited. The hardness of the first coating may be comprised between 50 MPa and 600 MPa, as measured by indentation. The indentation hardness of said coating is preferably determined with the nanoindentation tester UNHT³ of the company Anton Paar. Ideally, the first coating should have mechanical performances and hardness close to the substrate material.

The curable coating composition can comprise nanoparticles, and are also used to control the refractive index of the resulting first coating.

As used herein, the term "nanoparticles" is intended to mean solid particles of which the majority has a size higher than or equal to 1 nm but inferior to 1 µm. Nanoparticles may be spherical or non-spherical, elongated, even nanocrystals.

In the framework of this invention, the particle size is its diameter if the particle is spherical and its highest length if the particle is not spherical (length of the primary axis of the nanoparticles, which is defined as the longest straight line that can be drawn from one side of a particle to the opposite side). Processes for determining the particle size include BET adsorption, optical or scanning electron microscopy, or atomic force microscopy (AFM) imaging.

For applications such as ophthalmic optics, the nanoparticles used have such a size that they do not significantly influence the transparency of the coating. Actually, big nanoparticles provide a surface having higher hydrophobicity, but also higher haze.

Preferably, the nanoparticles used herein have an average particle size (or average diameter) of less than or equal to 200 nm, more preferably less than or equal to 150 nm, even more preferably less than or equal to 100 nm or 70 nm. Nanoparticles, which majority has an average particle size (or average diameter) of less than or equal to 40 nm are also useful. Preferably, the nanoparticles have an average particle size (or average diameter) higher than or equal to 10 nm. It is preferred that all nanoparticles satisfy these conditions.

In a preferred embodiment, coating composition comprises nanoparticles having an average particle size (or average diameter) ranging from 10 to 200 nm, 50 to 200 nm or 20 to 150 nm, preferably from 20 to 100 nm or 30 to 100 nm.

Nanoparticles may be organic, inorganic, or a mixture of both can be used. The nanoparticles can be made of at least one metal, at least one metal oxide, at least one metal nitride, at least one metal fluoride, or at least one polymer. Preferably, inorganic nanoparticles are used, especially metal oxide, metal nitride or metal fluoride nanoparticles, or mixtures thereof. In the context of the present invention, metal compounds include metalloid compounds. For example, metalloid oxides are considered to be metal oxides. Alloys, ceramics or composites containing carbon can also be used.

Suitable inorganic nanoparticles are for example nanoparticles of aluminum oxide Al₂O₃, silicon oxide SiO or SiO₂, zirconium oxide ZrO₂, titanium oxide TiO₂, antimony oxide, tantalum oxide Ta₂O₅, zinc oxide, tin oxide, indium oxide, cerium oxide, Si₃N₄, MgF₂ or their mixtures. It is also possible to use particles of mixed oxides. Using different types of nanoparticles allows making hetero-structured nanoparticles layers. Preferably, the nanoparticles are particles of aluminum oxide, zirconium oxide or silicon oxide SiO₂, more preferably SiO₂ nanoparticles.

Suitable organic nanoparticles are for example nanoparticles of polymers such as polycarbonate, polyethylene terephthalate (PET), polymethyl methacrylate (PMMA), polystyrene, polyethylene, polyester, polyacrylic acid (PAA), polymethacrylic acid, polyacrylamide (PAM), poly(alkyl acrylate) such as polymethyl acrylate (PMA), polyethyl acrylate (PEA), polybutyl acrylate (PBA).

For applications in which the transparent properties must be maintained, nanoparticles the refractive index of which is close to that of the material to be coated will be preferred.

The nanoparticles can be functionalized (or surface modified) with a coupling agent such as a silicone coupling agent like 3-trimethoxysilylpropylacrylate.

In one embodiment, the first coating is not an abrasion- and/or scratch-resistant coating (hard coat). In one embodiment, the optical article obtained at step 4) of the present process, with an outer first coating, exhibits a Bayer value measured in accordance with the ASTM F735-81 standard (sand Bayer value) lower than 5, preferably lower than 4, indicating a low abrasion resistance.

In one embodiment, the curable liquid first coating composition comprises less than 5 % of nanoparticles by weight, relative to the total weight of said curable liquid first coating composition, such as nanoparticles of metal or metalloid oxides, oxides, nitrides or fluorides, more preferably less than 2 % or less than 1 % by weight, and even better no nanoparticles. In one embodiment, the cured first coating comprises less than 5 % of nanoparticles by weight, relative to the total weight of said first coating, such as nanoparticles of metal or metalloid oxides, oxides, nitrides or fluorides, more preferably less than 2 % or less than 1 % by weight, and even better no nanoparticles. In one embodiment, the first coating is not a polysiloxane coating.

In some embodiments, the coating composition comprises at least one surfactant. The surfactant aids in wetting of the substrate, e.g., improve spreading of the composition in the microstructure, resulting in satisfactory cosmetics of the final coating. The surfactant can include for example poly(alkylene glycol)-modified polydimethylsiloxanes or polyheptamethylsiloxanes, or fluorocarbon-modified polysiloxanes. Preferred surfactants are fluorinated surfactant such as Novec^{®} FC-4434 from 3M (non-ionic surfactant comprising fluoroaliphatic polymeric esters), Unidyne^{™} NS-9013, and EFKA^{®} 3034 from CIBA (fluorocarbon-modified polysiloxane).

The coating composition may be provided with or without a solvent, which can be water and/or an organic solvent. In some cases, for example when the coating composition contains a significant amount of colloidal particles or nanoparticles, it may be necessary to use solvent to control viscosity or for improving flow properties, i.e., improving spreading of the composition. The amount of solvent(s) (which includes volatile compounds) in the curable liquid first coating composition preferably does not exceed 20 % by weight relative to the total weight of said curable liquid first coating composition, and is preferably less than 10 % by weight. Indeed, compositions containing a too high amount of solvents might exhibit high coating shrinkage upon curing, decreased covering/smoothing performances and a high PV2/PV1 ratio.

The curable liquid first coating composition preferably has a dry extract weight higher than or equal to 90 %.

The dry extract of a composition can be determined experimentally. It is the total weight of composition after the full removal of volatile species at 100°C to 110°C in an oven, preferably at 100°C. The dry extract is also called solids content, percent nonvolatile material by weight or % NVM. Traditional procedures to determine solids take 60 min at 105°C to 110°C in an oven, and require both pre-and post-weighing of the sample pan and sample (ASTM designations: D2369 and D2926-80). The procedures using the commercial Mark 3 solids analyzer purchased from Sartorius, or SMART Turbo^{™} purchased from CEM, take only 2 to 10 minutes, depending on the volatile/moisture content and viscosity of the material.

Also, the dry extract of a composition can be theoretically calculated, for example as described in EP 0614957.

The viscosity of the curable liquid first coating composition preferably ranges from 10 to 3000 cP, more preferably from 50 to 500 cP, preferably 50 to 400 cP, more preferably 200 to 400 cP. If said composition is too viscous, it may spread in a heterogeneous manner on the microstructure.

The solvent is for example selected from alcohols, glycol ethers, polyols and mixtures thereof. In embodiments where a coating composition is provided in combination with a solvent, the coating composition may be dried to remove at least a part of the solvent prior to curing.

The first coating composition may also comprise additives, such as free radical scavengers, antioxidants, dyes such as photochromic compounds, UV absorbers, adhesion promoters. In such a way, the first coating can provide additional functionality such as photochromic, coloring or filtering properties.

In step 2) of the method of the present invention, the at least one curable liquid composition suitable for forming a first coating is applied on the main surface of the substrate bearing a microstructure by a wet deposition technique.

Optionally, more than one first coating is applied on the microstructured main surface of the substrate to achieve complete smoothing of the surface of the optical article. The first coatings may be identical or different from each other.

A first coating can be cured partially or totally before the deposition of the subsequent first coating, which means that deposition and curing steps 2) and 3) can be repeated several times or a final curing step 3) can be performed.

In one embodiment, the number of first coatings applied on the substrate is lower than or equal to 6, preferably lower than or equal to 2. This number may depend on the geometry of the microstructure. In one embodiment, only one first coating is applied on the substrate bearing the microstructure.

In one embodiment, the curable liquid first coating composition is applied in step 2) by spin coating, dip coating, spray coating, rod coating (such as disclosed, e.g., in US 2023/161078) or inkjet coating (as disclosed in EP 4344863).

When using spin coating deposition, an adequate amount of coating composition is deposited on the whole surface of the optical article, which is spun to set the coating thickness at the target value. It is possible to benefit from the smoothing effect of the spreading force. Spin coating also allows a homogeneous spreading of the composition since the microstructure is kept horizontally during deposition. The deposition speed by spin coating preferably ranges from 200 to 1600 rpm, more preferably from 400 to 800 rpm. This reduced speed allows to obtain a thickest first coating and a smoother external coating surface.

When using spin coating or spray coating, the coating might exhibit an insufficiently smooth surface due either to the tendency to replicate the substrate structured surface or due to the deposition technique itself. In this case, in order to obtain a smoother surface, a subsequent heating step at low temperature of the applied curable coating composition can be carried out during curing step 3). Such low temperature heating step at a temperature lower than the boiling temperature of the main solvent or monomers enables to decrease the viscosity of the curable composition.

Alternatively, in order to obtain a first coating having a smoother surface, a leveling agent can be added to the first curable coating composition to even out the surface of the liquid coating composition.

The curable first coating composition can also be applied using inkjet coating technique. In such embodiment, the deposition of the curable composition is carried out in a pattern which is the complementary pattern of the microstructure.

Typically, wet deposition by inkjet comprises a first step or first pass depositing a limited or measured quantity of the curable coating composition at in the valleys of the microstructure, only partially covering the microstructure, resulting in a first layer, a second step or second pass depositing another limited quantity of the curable coating composition on top of the first layer in order to cover more, or fully cover, the optical elements of the microstructure, then an additional pass or several additional passes until the relevant thickness is reached, typically until the maximum total thickness of the first coating composition represents at least 2 times, preferably at least 5 times, the maximum peak-to-valley height of the microstructure PV1.

In this embodiment, the step of wet deposition comprises varying the amount of the curable composition suitable for forming the first coating depending on the local presence or absence of optical elements of the microstructure. Such control is possible via a method implemented by a computer such as the one disclosed in WO 2021/069443.

The curing step 3), which provides at least one first coating, can be implemented using any well-known polymerization technique and in particular thermal polymerization including infrared heating and electron beam irradiation, or radiation polymerization such as UV curing, depending on the nature of the first coating resin. In some embodiments, a combination of both radiation-curing and thermal curing can be employed, to complete the polymerization and increase the polymerization degree of the cured material. The curing time of step 3) is preferably lower than 5 hours, more preferably lower than 4, 3 or 2 hours.

In one embodiment, pre-polymerization until reaching the gel point is performed during or after application of the first coating composition on the substrate, for example by spin coating, followed by post-polymerization in an oven or by light irradiation.

Optionally, an impact-resistant primer coating is deposited on the outer first coating before step 5) of depositing an abrasion- and/or scratch-resistant coating onto the outer first coating.

The impact-resistant primer coating which may be used in the present invention can be any coating typically used for improving impact resistance of a finished optical article. By definition, an impact-resistant primer coating is a coating which improves the impact resistance of the finished optical article as compared with the same optical article but without the impact-resistant primer coating. This coating generally enhances adhesion of the abrasion- and/or scratch-resistant coating to the optical article.

Typical impact-resistant primer coatings are (meth)acrylic-based coatings and polyurethane-based coatings. In particular, the impact-resistant primer coating according to the invention can be made from a latex composition such as a poly(meth)acrylic latex, a polyurethane latex or a polyester latex.

Preferred primer compositions include compositions based on thermoplastic polyurethanes, such as those described in the patents JP 63-141001 and JP 63-87223, poly(meth)acrylic primer compositions, such as those described in the patents US 5015523 and US 6503631, compositions based on thermosetting polyurethanes, such as those described in the patent EP 0404111 and compositions based on poly(meth)acrylic latexes or polyurethane latexes, such as those described in the patents US 5316791 and EP 0680492. Preferred primer compositions are compositions based on polyurethanes and compositions based on latexes, in particular polyurethane latexes, poly(meth)acrylic latexes and polyester latexes, as well as their combinations. In one embodiment, the impact-resistant primer comprises colloidal fillers.

Poly(meth)acrylic latexes are latexes based on copolymers essentially made of a (meth)acrylate, such as for example ethyl (meth)acrylate, butyl (meth)acrylate, methoxyethyl (meth)acrylate or ethoxyethyl (meth)acrylate, with at least one other co-monomer in a typically lower amount, such as for example styrene.

Commercially available primer compositions suitable for use in the invention include the Witcobond^{®} 232, Witcobond^{®} 234, Witcobond^{®} 240, Witcobond^{®} 242 compositions (marketed by BAXENDEN CHEMICALS), Neorez^{®} R-962, Neorez^{®} R-972, Neorez^{®} R-986 and Neorez^{®} R-9603 (marketed by ZENECA RESINS), and Neocryl^{®} A-639 (marketed by DSM coating resins).

The thickness of the impact-resistant primer coating, after curing, typically ranges from 0.05 to 30 µm, preferably 0.2 to 20 µm and more particularly from 0.5 to 10 µm, and even better 0.6 to 5 µm or 0.6 to 3 µm, and most preferably 0.8 to 1.5 µm.

The impact-resistant primer coating, when used, is preferably in direct contact with the abrasion- and/or scratch-resistant coating. In one embodiment, its refractive index ranges from 1.45 to 1.55. In another embodiment, its refractive index is higher than or equal to 1.55.

In step 5) of the present process, an abrasion- and/or scratch-resistant coating is deposited onto the outer first coating, said abrasion- and/or scratch-resistant coating being different from the one or more first coatings.

The abrasion- and/or scratch-resistant coating may be any layer traditionally used as an anti-abrasion and/or anti-scratch coating in the field of optics.

The abrasion- and/or scratch-resistant coatings are preferably hard coatings based on poly(meth)acrylates or organosilanes and/or siloxanes, generally comprising one or more inorganic fillers intended to increase the hardness and/or the refractive index of the coating once cured.

Abrasion- and/or scratch-resistant coatings are preferably prepared from compositions comprising at least one alkoxysilane and/or a hydrolyzate thereof, obtained for example through hydrolysis with a hydrochloric acid solution and optionally condensation and/or curing catalysts.

After the hydrolysis stage, the duration of which is generally between 2 h and 24 h, preferably between 2 h and 6 h, catalysts can optionally be added. A surface-active compound is preferably also added in order to promote the optical quality of the deposit.

Numerous examples of condensation and/or curing are given in the publications "Chemistry and Technology of the Epoxy Resins", B. Ellis (Ed.), Chapman Holl, New York, 1993 and "Epoxy resins and Technology", 2nd Edition, C. A. May (Ed.), Marcel Dekker, New York, 1988.

Suitable coatings that are recommended for the present invention include coatings based on epoxysilane hydrolyzates such as those described in the patents EP 0614957, US 4211823 and US 5015523.

A preferred abrasion- and/or scratch-resistant coating composition is the one disclosed in the EP 0614957, in the name of the applicant. It comprises a hydrolyzate of epoxy trialkoxysilane and dialkyl dialkoxysilane, colloidal silica and a catalytic amount of an aluminum-based curing catalyst such as aluminum acetylacetonate, the remainder being essentially composed of solvents traditionally used for formulating such compositions. Preferably, the hydrolyzate used is a hydrolyzate of γ-glycidoxypropyltrimethoxysilane (GLYMO) and dimethyldiethoxysilane (DMDES), or else a γ-glycidoxypropyltrimethoxysilane (GLYMO) and tetraethoxysilane (TEOS) hydrolyzate.

In a preferred embodiment, the abrasion- and/or scratch-resistant coating is a sol/gel coating comprising hydrolyzates of alkoxysilanes (polysiloxane coating), but it can also be an epoxy-based coating, an acrylate based coating, and/or a polyurethane based coating.

Another preferred composition for forming the abrasion- and/or scratch-resistant coating of the present invention comprises polyfunctional acrylate monomers such as 1,6-hexanedioldiacrylate, dipentaerythritol hexaacrylate or a mixture thereof, optionally organosilane compounds such as vinylalkoxysilane, for example vinyltrimethoxysilane, optionally polyfunctional epoxy compounds such as trimethylolpropanetriglycidyl ether, nanoparticles such as silica nanoparticles such as hollow silica nanoparticles, for example surface modified hollow silica nanoparticles, a free radical photo-initiator or a cationic photoinitiator or a mixture thereof and surfactants such as a silicone hexa-acrylate surfactant, a fluorocarbon-modified polysiloxane or a mixture thereof. An example of a UV curable coating composition comprising an acrylic monomer, an epoxy monomer and an acrylate/vinyl silane-modified colloidal silica mixed in an aqueous/organic solvent system is disclosed in US 2007/238804. An example of a UV curable coating composition comprising an acrylic monomer, an epoxysilane monomer and colloidal silica is disclosed in US 2024/022849.

The abrasion- and/or scratch-resistant coating composition may be deposited by known methods such as spin or dip coating, and is then cured, preferably using heat or ultraviolet radiation. The thickness of the (cured) abrasion- and/or scratch-resistant coating is preferably lower than or equal to 5 µm, and does generally vary from 2 to 5 µm, preferably from 3 to 5 µm or 2 to 4 µm.

When the thickness of the abrasion- and/or scratch-resistant coating is too important, crackings and/or delamination can occur, given the difference in mechanical properties with the substrate (hardness, expansion, etc.). This is one of the reasons why it is necessary to use first coating(s) as an intermediate layer to coat the microstructure of the substrate. Directly depositing the abrasion- and/or scratch-resistant coating on the microstructure could lead to cracking/delamination of such coating, taking into account the coating thickness that is generally necessary to apply on the microstructure. Further, the abrasion- and/or scratch-resistant coating composition generally contains a high proportion of solvent, which would result in a high level of unsuitable shrinkage and a low viscosity, making it very difficult to achieve high thicknesses.

The abrasion- and/or scratch-resistant may provide further smoothing of the surface of the substrate, in case the outer surface of the (outer) first coating is not completely smooth.

Once cured, the abrasion- and/or scratch-resistant coating has a smooth outer surface parallel to the surface of the lens substrate without the optical elements of the microstructure, i.e., a surface which does not replicate the height changes of the microstructure. It has the same base curve as the base curve of the surface of the substrate without the optical elements of the microstructure.

The abrasion- and/or scratch-resistant coating has an outer surface with a maximum peak-to-valley height PV3 measured in a direction perpendicular to the main surface of the substrate onto which it is deposited that is preferably lower than 100 nm, more preferably lower than or equal to 50 nm, even more preferably lower than or equal to 40 nm, 30 nm, or 20 nm. In a preferred embodiment, PV3 ranges from 2 to 20 nm or 5 to 20 nm.

In one embodiment, PV3/PV1 < 0.05. In another embodiment, PV3/PV2 < 0.5.

The smooth outer surface (free surface) of the abrasion- and/or scratch-resistant coating is particularly advantageous for subsequent deposition of other functional coatings such as antireflective, antifouling, or antifog coatings, aesthetic and comfort. Furthermore, the abrasion- and/or scratch-resistant coating shows improved mechanical properties thanks to its smooth surface, contrary to prior art hard coats somewhat reproducing the underlying microstructured surface.

In one embodiment, the process according to the invention further comprises: 6) Depositing an antireflective coating and an antifouling or an antifog coating onto said abrasion- and/or scratch resistant coating, the outer (free) surface of the resulting optical article having a maximum peak-to-valley height PV4 measured in the direction perpendicular to said outer (free) surface lower than or equal to 200 nm or 100 nm, more preferably lower than or equal to 50 nm, even more preferably lower than or equal to 40 nm, 30 nm, or 20 nm.

After application of an antireflective coating and an antifouling or antifog coating, the outer free surface of the optical article has a maximum peak-to-valley height PV4 measured in the direction perpendicular to the main free surface of the optical article within the same range as PV3. In a preferred embodiment, PV3 ranges from 2 to 20 nm).

In a preferred embodiment, the first coating is thicker than the abrasion- and/or scratch-resistant coating of the present invention. In case of a plurality of first coatings, the total thickness of the first coatings is preferably thicker than the abrasion- and/or scratch-resistant coating of the present invention.

The method for manufacturing the optical article may further comprise additional steps, such as depositing at least one additional coating on the abrasion- and/or scratch-resistant coating, for example at least one additional coating selected from an interferential coating, an antistatic coating, a photochromic coating, a hydrophobic and/or oleophobic coating (anti-fouling coating), an antifog coating or other coatings such as a tintable coating, a polarized coating, a dyed coating, a printed layer, a coating with a spectral filtering function (such as bandpass filtering, filtering of specific colors, UV absorption...). The interferential coating can be an antireflective or reflective coating. It can be configured to at least partially cut UV light and/or blue light.

In one embodiment, the present optical article is prepared by forming on the substrate the first coating(s) and the abrasion- and/or scratch-resistant coating in a first manufacturing site, while the other coatings that may be present are formed in a second manufacturing site.

The present process can be used to manufacture a finished lens, having both sides at the required geometries, or a semi-finished lens, having one face that still needs to be surfaced at the required geometry. The present process can comprise finishing steps including surfacing a semi-finished optical article to obtain the desired target power, and/or edging the optical article.

The invention also relates to an optical article, comprising
- a substrate having at least one main surface bearing a microstructure with a maximum peak-to-valley height of the microstructure PV1, measured in a direction perpendicular to said main surface, higher than 0.1 µm, and deposited thereon:
- one or more one first coatings in which said microstructure is encapsulated, the outer first coating of which having an external surface with a maximum peak-to-valley height PV2 measured in a direction perpendicular to said main surface such that PV2/PV1 < 0.15 and the ratio: maximum total thickness of the one or more first coatings / PV1 is higher than or equal to 2,
- an abrasion- and/or scratch-resistant coating formed onto said outer first coating, said abrasion- and/or scratch-resistant coating being different from the one or more first coatings.

The different embodiments and/or preferred features described for the process of the invention applies equally to the optical article of the invention.

The following examples illustrate the present invention in a more detailed, but non-limiting manner. Unless stated otherwise, all thicknesses disclosed in the present application relate to physical thicknesses and all thicknesses/heights of elements such as layers or microstructures are measured in a direction perpendicular to the main surface of the substrate carrying said elements. The refractive indexes referred to in the present application are expressed at 25°C at a wavelength of 550 nm.

### EXAMPLES

### Examples 1-2

The lens with a microstructure on its surface was made of polycarbonate Lexan OQ3820^{®}, sold by Sabic and had a refractive index of 1.586. The microstructure had a maximum peak-to-valley height PV1 of 3.5 µm.

The first coating was an acrylate coating having a refractive index of 1.497, obtained from a photocurable coating composition comprising the dioxane glycol diacrylate compound 2-[5-[(acryloyloxy)methyl]-5-ethyl-1,3-dioxan-2-yl]-2-methylpropyl acrylate (A3441^{®} from TCI Chemicals) and 0.5 % by weight of a radical photoinitiator (Irgacure^{®} 819 from by CIBA, which is phenylbis(2,4,6-trimethylbenzoyl)phosphine oxide). The composition has a dry extract weight at 100°C of almost 100 %. The A3441^{®} resin has a theoretical maximum shrinkage of 16.44 % determined by the method disclosed in the description (functionality = 2, density = 1.09, molecular weight = 326.34 g/mol).

The above-described curable liquid first coating composition was deposited by spin coating on the microstructured lens with a Headway Research bench top spin coater at a speed indicated in table 1, and UV-cured for 180 seconds with a mercury lamp (H+ bulb).

Subsequently, an abrasion- and/or scratch-resistant coating was applied onto the first coating. This coating comprises a primer layer of W234 latex (0.9 µm thick) and a polysiloxane hard coat (3.5 µm thick) deposited thereon corresponding to the composition of example 3 of EP0614957. The spin coating speed was 1000 rpm for example 1 and 600 rpm for example 2.

### Example 3

The lens was prepared as in examples 1-2, except that the curable liquid first coating composition (Composition 1) comprised tricyclodecane dimethanol diacrylate, hexanedioic acid polymer with 2,2-dimethyl-1,3-propanediol and 5-isocyanato-1-(isocyanatomethyl)-1,3,3-trimethylcyclohexane and a glycol monoether (Dowanol PM^{®} from Dow Chemical, 5 % by weight). This resin has a theoretical maximum shrinkage of 17.9 % determined by the method disclosed in the description (functionality = 2, density = 1.1, molecular weight = 304.38 g/mol). The first coating was cured for 6 min under nitrogen, UV Mercury bulb H+ Dose: 12000mJ/cm² Power: (231nm-416nm): 33,16mW/cm². Once cured, the first coating had a refractive index of 1.53. The spin coating speed was 800 rpm.

### Comparative examples 1-4

The lenses were prepared as in examples 1-2, except that the curable liquid first coating composition of comparative examples 1 and 2 comprised a water-based polyurethane dispersion (Alberdingk^{®} U 5200 from Alberdingk Boley GmbH) (dry extract weight of 37%), diluted with water so as to have a dry extract weight of 30 %, and the curable liquid first coating composition of comparative examples 3 and 4 comprised the water-based polyurethane dispersion (Alberdingk^{®} U 5200 from Alberdingk Boley GmbH) (dry extract weight of 37%). The liquid coatings were thermally cured for 3h at 100°C.The spin coating speed was 300-400 rpm for examples C1-C4 and 400-800 rpm for examples C2-C3.

The results are shown in table 1.

**Table 1**

| Example | First coating resin | Dry extract weight | Viscosity (cp) | First coating thickness | PV1 | PV2 | PV2/PV1 (*) |
|---|---|---|---|---|---|---|---|
| 1 | A3441^{®} | 100% | 329 | 14 µm | 3.5 µm | 0.25 µm | 0.071 |
| 2 | A3441^{®} | 100% | 329 | 25 µm | 3.5 µm | 0.26 µm | 0.074 |
| 3 | Composition1 | 95% | 262 | 37 µm | 3.5 µm | 0.23 µm | 0.066 |
| C1 | Alberdingk^{®} U 5200 diluted with water to 30% dry extract | 30% | | 5 µm | 3.5 µm | 2.0 µm | 0.571 |
| C2 | Alberdingk^{®} U 5200 diluted with water to 30% dry extract | 30% | | 3 µm | 3.5 µm | 2.75 µm | 0.786 |
| C3 | Alberdingk^{®} U 5200 | 37% | | 10.5 µm | 3.5 µm | 2.0 µm | 0.571 |
| C4 | Alberdingk^{®} U 5200 | 37% | | 17 µm | 3.5 µm | 2.2 µm | 0.629 |

| | | | | | | | |
|---|---|---|---|---|---|---|---|
| (*) Measured before applying the abrasion- and/or scratch-resistant coating onto the first coating. | | | | | | | |

It can be seen that the lenses prepared by the method according to the invention have a low residual maximum peak-to-valley height PV2. The smoothing function of the microstructure is adequately performed by the first coating (PV2/PV1 = 7 %). Figure 3 represents the surface of the optical article of example 1 before and after coating with a cured first coating.

The comparative lenses have a high residual maximum peak-to-valley height PV2, leading to an unacceptable ratio PV2/PV1, which is in part due to the significant amount of solvent in the coating composition, reducing surface smoothness.

## Claims

1. A method of manufacturing an optical article, comprising:
1) Providing a substrate having at least one main surface bearing a microstructure with a maximum peak-to-valley height of the microstructure PV1, measured in a direction perpendicular to said main surface, higher than 0.1 µm,
2) Applying by wet deposition on said at least one main surface bearing a microstructure at least one curable liquid first coating composition,
3) Curing said at least one curable liquid first coating composition to form at least one first coating having an external surface,
4) Obtaining a substrate coated with one or more first coatings in which said microstructure is encapsulated, the outer first coating of which having an external surface with a maximum peak-to-valley height PV2 measured in a direction perpendicular to said main surface such that PV2/PV1 < 0.15, the ratio: maximum total thickness of the one or more first coatings / PV1 is higher than or equal to 2,
5) Depositing an abrasion- and/or scratch-resistant coating onto said outer first coating, said abrasion- and/or scratch-resistant coating being different from the one or more first coatings.

2. A method according to claim 1, wherein PV1 is lower than or equal to 30 µm, preferably lower than or equal to 15 µm, more preferably lower than or equal to 10 µm and even more preferably ranges from 2 to 5 µm.

3. A method according to any one of the preceding claims, wherein the maximum total thickness of the one or more first coatings is lower than or equal to 200 µm, and preferably higher than or equal to 2.5 µm, and more preferably ranges from 10 µm to 200 µm.

4. A method according to any one of the preceding claims, further comprising:
6) Depositing an antireflective coating and an antifouling or an antifog coating onto said abrasion-and/or scratch resistant coating, the outer surface of the resulting optical article having a maximum peak-to-valley height PV4 measured in the direction perpendicular to said outer surface lower than or equal to 100 nm, more preferably lower than or equal to 50 nm, even more preferably lower than or equal to 40 nm, 30 nm, or 20 nm.

5. A method according to any one of the preceding claims, wherein the number of said first coatings applied on the substrate is lower than or equal to 2.

6. A method according to any one of the preceding claims, wherein said at least one curable liquid first coating composition comprises 20 % or less of solvent by weight relative to the total weight of said curable liquid first coating composition.

7. A method according to any one of the preceding claims, wherein said at least one curable liquid first coating composition is applied in step 2) by spin coating, dip coating, spray coating, rod coating or ink jet coating.

8. A method according to any one of the preceding claims, wherein said first coating comprises a matrix made of (thio)urethane compounds, (meth)acrylate compounds, epoxy compounds, silane compounds, siloxane compounds and mixtures thereof.

9. A method according to any one of the preceding claims, wherein said at least one curable liquid first coating composition comprises less than 5 % of nanoparticles by weight, relative to the total weight of said curable liquid first coating composition.

10. A method according to any one of the preceding claims, wherein said microstructure comprises at least one or a plurality of optical elements selected from a Fresnel lens, a microlens, a diffractive lens.

11. A method according to any one of the preceding claims, wherein said microstructure is made of a material having a refractive index ns and the first coating that is in direct contact with said microstructure has a refractive index nc such that Ins-ncl > 0.05.

12. A method according to any one of the preceding claims, wherein said curable liquid first coating composition applied in step 2) undergoes a thickness shrinkage upon curing of less than 20 %.

13. A method according to any one of the preceding claims, wherein said abrasion- and/or scratch-resistant coating is a sol/gel coating comprising hydrolyzates of alkoxysilanes.

14. A method according to any one of the preceding claims, wherein said substrate is an optical lens substrate.

15. An optical article, comprising:
- a substrate having at least one main surface bearing a microstructure with a maximum peak-to-valley height of the microstructure PV1, measured in a direction perpendicular to said main surface, higher than 0.1 µm, and deposited thereon:
- one or more one first coatings in which said microstructure is encapsulated, the outer first coating of which having an external surface with a maximum peak-to-valley height PV2 measured in a direction perpendicular to said main surface such that PV2/PV1 < 0.15 and the ratio: maximum total thickness of the one or more first coatings / PV1 is higher than or equal to 2,
- an abrasion- and/or scratch-resistant coating formed onto said outer first coating, said abrasion- and/or scratch-resistant coating being different from the one or more first coatings.
